# EUROPEAN PATENT SPECIFICATION

(11) **EP 1 628 857 B1**
(45) Date of publication and mention of the grant of the patent: **27.01.2010**
(21) Application number: 04737767.6
(22) Date of filing: 02.06.2004
(51) Int. Cl.: B60R 19/18, F16F 7/12

(54) **BUMPER ENERGY ABSORBER AND METHOD OF FABRICATING AND ASSEMBLING THE SAME**
STOSSFÄNGER ENERGIEAUFNAHMEVORRICHTUNG UND VERFAHREN ZU SEINER HERSTELLUNG UND MONTAGE
AMORTISSEUR DE PARE-CHOCS ET PROCEDE DE FABRICATION ET D'ASSEMBLAGE

(30) Priority: 03.06.2003 US 475275 P
(43) Date of publication of application: 01.03.2006
(73) Proprietor: Decoma International Inc., Concord, Ontario L4K 4J5 (CA); Magna International Inc., Aurora, ON L4G 7K1 (CA)
(72) Inventor: BATOR, Mary, Ann, Farmington Hills, MI 48334 (US); HUOTARI, Keijo, J., Fenton, MI 48430 (US); HENDERSON, Jack, V., Rochester Hills, MI 48306 (US); ZEMMER, Richard, Metamora, MI 48455 (US)
(74) Representative: Hössle Kudlek & Partner
(86) International application number: PCT/CA2004/000823
(87) International publication number: WO 2004/106117

(56) References cited:
- EP-A- 1 293 389
- WO-A-01/33100
- FR-A- 2 410 184
- FR-A- 2 702 432
- US-A- 4 029 350
- US-A- 5 425 561
- US-A- 5 746 419
- US-A1- 2003 020 290
- US-B1- 6 443 513

## Description

### Field of the Invention

This invention relates to a motor vehicle bumper assembly. More particularly, this invention relates to a motor vehicle bumper beam energy absorber that is constructed of extruded plastic in a cell network, and a method of fabricating and assembling the same.

### Description of the Prior Art

Bumpers are used on automobiles for absorbing shock and impact from collisions, thereby preventing and/or decreasing injury to persons and damage to property, including the vehicle. Automobile bumpers typically include an impact or reinforcement beam, energy absorbers surrounding the beam, and a fascia surrounding the energy absorber. The beam, usually constructed of high strength steel or aluminum, is attached to the vehicle frame. The energy absorber is typically a foam material although hydraulic or gas piston and cylinder assemblies have been used. The third main component, the fascia, is the visible exterior of the bumper assembly, and is typically made of plastic. Of the three main bumper system components, the one most relevant to the present invention is the energy absorber.

The energy absorber of the bumper absorbs energy during a collision, thereby helping to prevent damage to the motor vehicle. Since the mass of cars and trucks varies, the amount of energy that needs to be absorbed to prevent damage also varies. Accordingly, different vehicles require different shaped and sized bumper systems. However, many of the current bumper systems require expensive molds to manufacture the commonly used injection molded bumper beam energy absorbers. Due to the high cost of these molds, energy absorbers are not specifically designed for each specific type of vehicle. Instead, a one-size-fits-all-type energy absorber is used on many different vehicles, often adding excess weight to the vehicle and excess cost due to the use of unnecessary materials.

Therefore, it would be beneficial to have an energy absorber that can be specifically designed for optimal performance in different size/weight vehicles without the need for the costly molds needed by other types of energy absorbers. Designing an energy absorber for each specific vehicle will reduce the excess weight and material cost due to energy absorber overdesign. Furthermore, the expensive injection molds will no longer be needed.

US 5,425,561 discloses an energy absorber as an elastic deformable element consisting of a plurality of interconnected molded cells, which can be formed from foam or other suitable materials.

FR 2 702 432 A discloses a bumper beam energy absorber comprising one layer of extruded cell panels having substantially horizontally oriented interconnected closed loop cells defining an open cell network.

### SUMMARY OF THE INVENTION

According to the invention, there is provided a bumper beam energy absorber for use with an automotive vehicle according to claim 1, a vehicle bumper system according to claim 5 and a method of manufacturing said bumper system according to claim 9. A rigid structural impact beam attaches the bumper beam energy absorber to the vehicle. A decorative fascia is spaced from the impact beam. The energy absorber is sandwiched between the impact beam and the fascia. The energy absorber includes a plurality of layers of cell panels, which are formed by interconnected closed loop cells, to define an open cell network for absorbing impact energy exerted upon the fascia before the energy reaches the impact beam.

The energy absorber has a plurality of layers of cell panels. The open cell network may vary between cell panel layers in the energy absorber. The overall size, degree of elongation, and cell length may vary between cell panel layers to adjust the amount of energy absorbed by each particular cell panel layer. Further, the cross-section of the cells in one cell panel layer may vary to adjust the amount of energy that can be absorbed by a particular section of the cell panel layer.

Moreover, the cell network is be formed by extrusion and the cell panels have at least two sections wherein a first of said two sections has cells of a first predetermined size and wall thickness and a second of said two sections has cells of a second predetermined size and wall thickness, less than the first predetermined size and wall thickness.

### BRIEF DESCRIPTION OF THE DRAWINGS

Advantages of the present invention will be readily appreciated as the same becomes better understood by reference to the following detailed description when considered in connection with the accompanying drawings wherein:
Figure 1 is a cross-sectional view taken along line A-A in Figure 2 of an energy absorbing bumper system;
Figure 2 is a perspective view of an energy absorbing bumper system;
Figure 3 is a fragmentary perspective view of the energy absorbing bumper system;
Figure 4 is an expanded perspective view of an energy absorber and an impact beam;
Figure 5 is an enlarged view of section A in Figure 4 of an energy absorber; and
Figure 6 is a cross-sectional view taken along line A-A in Figure 2 of an energy absorber with reinforcing material.

### DETAILED DESCRIPTION OF THE PREFERRED EMBODIMENT

Referring to the Figures, an energy absorbing bumper system is generally indicated at 10. The energy absorbing bumper system 10 includes an impact beam 12, an energy absorber 14, and a fascia 16. The energy absorber 14 includes layers of extruded cell panels 20.

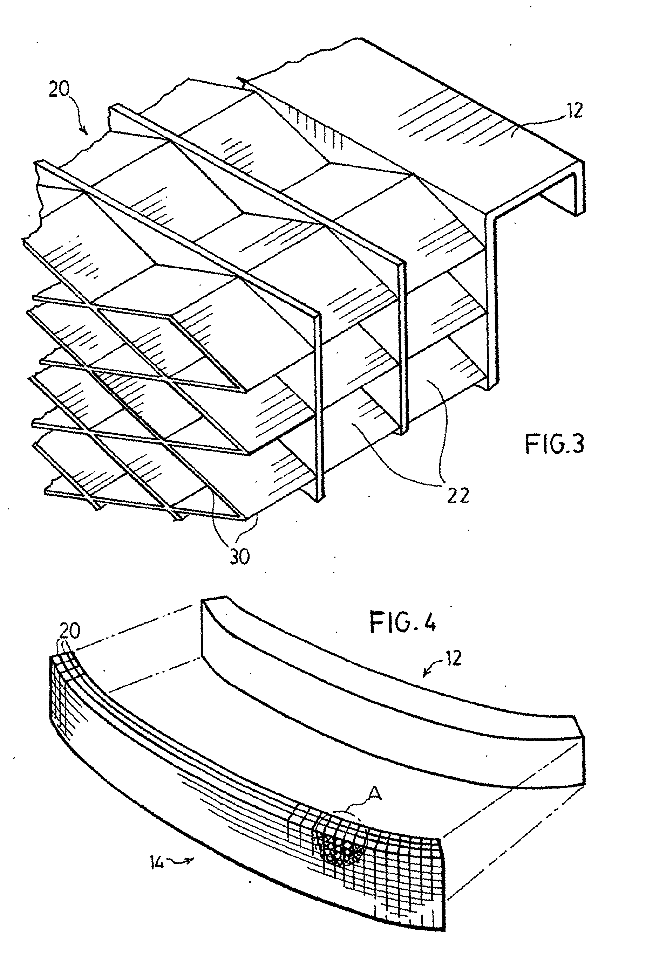

The cell panels 20 are of any extrudable material, preferably a low-cost olefinic material. The extrusion process eliminates the need for expensive molds required to manufacture injection molded bumper beam energy absorbers in order to accommodate different vehicles. Additionally, the extruded part is lighter than foamed energy absorbers and capable of absorbing more energy. Each cell panel 20 is made up from a plurality of joined hollow cells 22 and 22' formed during the extrusion process, which results in an open-cell network. The cells 22, 22' can be of any shape such as honeycomb, diamond or oval in shape, as shown in Figures 3 and 4 and may have any geometric cross-sectional shape. The extrusion process can be continuous and the extruded material then hot wire cut to the desired width on a continuous basis.

Each cell 22 is formed or defined by a continuous or closed loop cell wall 30 to create the open-cell network. The configuration of cells 22, with respect to size and direction, can be varied along the length and thickness of the energy absorber 14 to optimize the shock absorption due to different types of impact across the bumper beam, since the impact energy is different when the vehicle is hit straight on, from the side, etc. More specifically, the extrusion process allows for the size of the cells 22 and the thickness of the cell wall 30 in any section of the extrusion to be varied within a cell panel 20. Thus, the amount of energy that can be absorbed by the energy absorber 14 in one section of the bumper system 10 is greater than the other section. Likewise, the overall size, degree of elongation, and the direction of the length L of the cells 22 can be varied between the layers of cell panels 20 to change the overall amount of energy that can be absorbed by the energy absorber 14.

Further, one or more layers of cell panels 20 may be stacked. Each layer of cell panels 20 may have a different length L and/or a plurality of arrays of different sized cells 22 and cell wall 30 thickness. The positioning of the sections of the cell panels 20 in each layer is configured to cooperate with sections of adjacent layers to absorb energy.

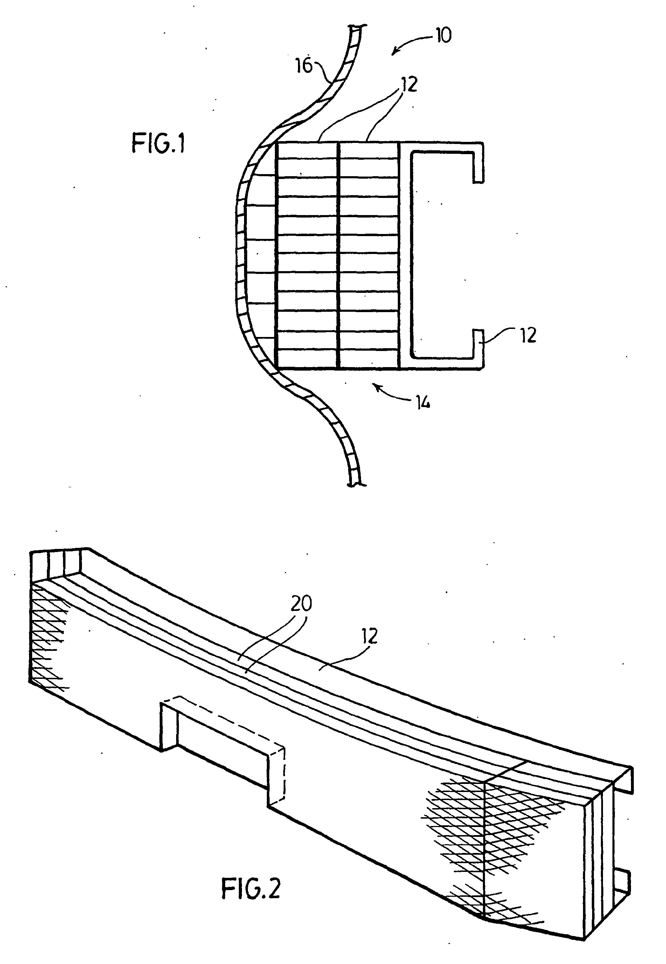

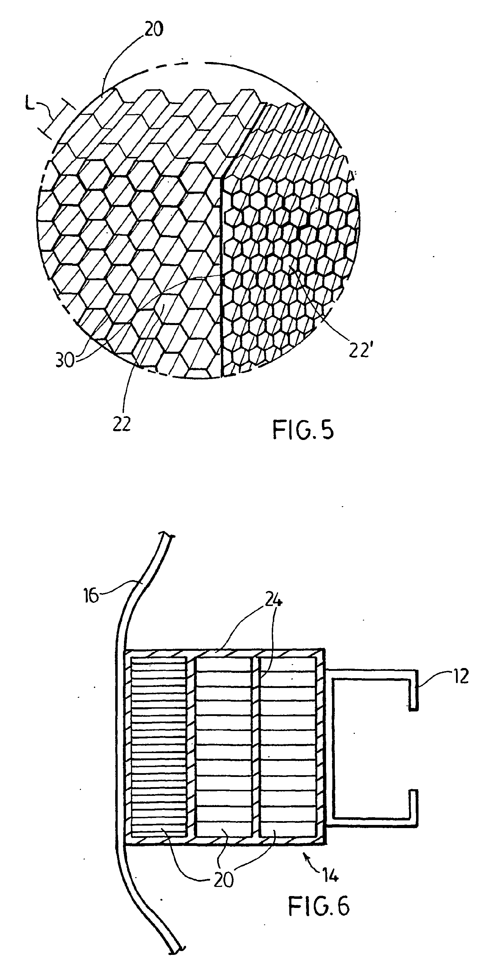

Referring to Figure 6, the layers of cell panels 20 may include a reinforcing sheet material 24 placed in-between adjacent stacked layers of cell panels 20 shown in Figures 2 and 6, or covering the outermost layers of cell panels 20, or completely encapsulating the energy absorber 14. The reinforcing material 24 can be of any sheet material which tends to strengthen, including woven, non-woven, plastic, glass, paper, any organic fibers such as cotton or flax, or metal foil material.

One skilled in the art will recognize that there are numerous combinations of the above components. As a result, the properties of the cells 22 and the number of layers of cell panels 20 can be modified to absorb the amount of energy necessary for a specific vehicle. Addition of a reinforcing material 24 will increase the strength of the energy absorber 14. Designing the energy absorber 14 for each specific vehicle will eliminate unnecessary weight to the vehicle due to overdesign.

In another embodiment of the energy absorber 14, protection for pedestrian impact is incorporated into the design. The cells 22 and the layers of cell panels 20 are designed such that the cell panel 20 constituting the outermost layer, closest to the fascia 16 and closest to the pedestrian, collapses more readily than subsequent layers, thereby reducing the severity of impact to a pedestrian.

The method of fabricating and assembling a bumper beam energy absorber 14 begins with extruding a provided sheet material into an open-cell network, thereby forming a cell panel 20. The extrusion process may be done on a continuous basis and then cut, via a method such as hot wire cutting, to the desired width.

The next step is to integrate, stack, or overlap the necessary or desired number of layers of cell panels 20, thereby forming the energy absorber 14. The energy absorber 14 is conformed to the shape of the inner face of the fascia 16 enabling the energy absorber 14 to nest within the fascia 16. The conforming step can take place as the energy absorber 14 is being assembled, or when the cell panel 20 is still warm from the extrusion process.

The final step is to install the energy absorber 14 between a provided structural impact beam 12 and a provided decorative fascia 16. The installation can be via a variety of methods, including the use of fasteners, adhesive, heat staking, or sonic welding.

The invention has been described in an illustrative manner, and it is to be understood that the terminology that has been used is intended to be in the nature of words of description rather than of limitation. Many modifications and variations of the present invention are possible in light of the above teachings. It is, therefore, to be understood that within the scope of the appended claims, the invention may be practiced other than as specifically described.

## Claims

1. A bumper beam energy absorber for use with an automotive vehicle comprising a plurality of layers of cell panels (20) having interconnected closed loop cells (22, 22') defining an open cell network, said cells being substantially horizontally orientated when the energy absorber is mounted on the vehicle, said open cell network comprising at least two different sized cells (22, 22') positioned in at least two different sections of the energy absorber to absorb more energy in one section than the other, wherein said open cell network is formed by extrusion and wherein each of said extruded cell panels (20) has said at least two sections wherein a first of said two sections has cells (22) of a first predetermined size and wall thickness and a second of said two sections has cells (22') of a second predetermined size and wall thickness, smaller than said frist predetermined size and wall thickness, and wherein the open cell network may vary between the cell panel layers of the energy absorber.

2. A bumper beam energy absorber as set forth in claim 1 wherein the positioning of said sections of said layers of cell panels (20) cooperate to absorb energy.

3. A bumper beam energy absorber as set forth in claim 2 wherein a reinforcing sheet material (24) is interposed between said layers of cell panels (20).

4. A bumper beam energy absorber as set forth in claim 2 wherein said layers of cell panels (20) are enclosed with a reinforcing sheet material (24).

5. A vehicle bumper system comprising
an impact beam (12) configured to be attached to a vehicle frame,
a fascia (16) positioned to conceal said impact beam, and
an energy absorber (14) according to any one of claims 1 to 4, sandwiched between said impact beam (12) and said fascia (16).

6. A vehicle bumper system as set forth in claim 5 wherein said energy absorber (14) is contoured to nest within and support said fascia (16).

7. A vehicle bumper system as set forth in claim 6 wherein an outermost layer of cell panels (20) is configured to collapse more readily than an inner layer of cell panels (20).

8. A vehicle bumper system as set forth in claim 7 wherein said outermost layer is adjacent said fascia (16).

9. A method of manufacturing a vehicle bumper system according to any one of claims 5 to 8, said method comprising the steps of:
extruding a sheet material into a cell panel (20) having an open cell network comprising at least two different sized cells (22, 22') positioned in at least two sections to absorb more energy in one section than another;
combining at least two cell panels (20) to form an energy absorber (14), wherein the cells (22, 22') in the cell panels (20) are substantially horizontally orientated;
conforming an outer face of said energy absorber (14) to complementarily fit within an inner face of a fascia (16);
combining said energy absorber between said fascia and an impact beam.

## Patentansprüche

1. Stoßstangenträger-Energieabsorber zur Verwendung mit einem Kraftfahrzeug mit einer Mehrzahl von Schichten, die aus Zellplatten (20) mit miteinander verbundenen, in einer Umfangsrichtung geschlossenen Zellen (22, 22') bestehen, die ein offenes Zellnetzwerk definieren, wobei die Zellen im wesentlichen horizontal ausgerichtet sind, wenn der Energieabsorber an dem Fahrzeug befestigt ist, wobei das offene Zellnetzwerk mindestens zwei Zellen (22, 22') unterschiedlicher Größe umfasst, die in mindestens zwei unterschiedlichen Abschnitten des Energieabsorbers angeordnet sind, um in einem Abschnitt mehr Energie zu absorbieren als in dem anderen, wobei das offene Zellnetzwerk mittels Extrusion hergestellt ist und jede der extrudierten Zellplatten (20) die mindestens zwei Abschnitte aufweist, wobei ein erster Abschnitt der beiden Abschnitte Zellen (22) mit einer ersten vorbestimmten Größe und Wandstärke aufweist und ein zweiter Abschnitt der beiden Abschnitte Zellen (22') mit einer zweiten vorbestimmten Größe und Wandstärke aufweist, die kleiner als die erste vorbestimmte Größe und Wandstärke sind, und wobei das offene Zellnetzwerk zwischen den Zellplattenschichten des Energieabsorbers variieren kann.

2. Stoßstangenträger-Energieabsorber nach Anspruch 1, wobei die Anordnung der Abschnitte der aus Zellplatten (20) bestehenden Schichten beim Absorbieren von Energie mitwirkt.

3. Stoßstangenträger-Energieabsorber nach Anspruch 2, wobei ein verstärkendes Plattenmaterial (24) zwischen den aus Zellplatten bestehenden Schichten (20) eingefügt ist.

4. Stoßstangenträger-Energieabsorber nach Anspruch 2, wobei die aus Zellplatten (20) bestehenden Schichten mit einem verstärkenden Plattenmaterial (24) umschlossen sind.

5. Fahrzeugstoßfängersystem mit
einem zum Befestigen an einem Fahrzeugrahmen ausgebildeten Aufprallträger (12),
einer zum Verdecken des Aufprallträgers angeordneten Verkleidung (16) und
einem zwischen dem Aufprallträger (12) und der Verkleidung (16) angeordneten Energieabsorber (14) nach einem der Ansprüche 1 bis 4.

6. Fahrzeugstoßfängersystem nach Anspruch 5, wobei der Energieabsorber (14) zum Einstecken bzw. Einsetzen in die Verkleidung (16) und zum Stützen der Verkleidung (16) konturiert bzw. geformt ist.

7. Fahrzeugstoßfängersystem nach Anspruch 6, wobei eine äußerste, aus Zellplatten (20) bestehende Schicht dazu ausgebildet ist, leichter zu kollabieren als eine innere, aus Zellplatten (20) bestehende Schicht.

8. Fahrzeugstoßfängersystem nach Anspruch 7, wobei die äußerste Schicht nahe der Verkleidung (16) angeordnet ist.

9. Verfahren zur Herstellung eines Fahrzeugstoßfängersystems nach einem der Ansprüche 5 bis 8, wobei das Verfahren die folgenden Schritte umfasst:
Extrudieren eines Plattenmaterials zu einer Zellplatte (20) mit einem offenen Zellnetzwerk, das mindestens zwei Zellen (22, 22') unterschiedlicher Größe umfasst, die in mindestens zwei Abschnitten angeordnet sind, um in einem Abschnitt mehr Energie zu absorbieren als in einem anderen,
Verbinden von mindestens zwei Zellplatten (20) zur Bildung eines Energieabsorbers (14), wobei die Zellen (22, 22') in den Zellplatten (20) im wesentlichen horizontal ausgerichtet sind,
Anpassen einer Außenfläche des Energieabsorbers (14), um komplementär in eine Innenfläche einer Verkleidung (16) zu passen,
Einbauen des Energieabsorbers zwischen der Verkleidung und einem Aufprallträger.

## Revendications

1. Absorbeur d'énergie pour traverse de pare-chocs destiné à être utilisé avec un véhicule automobile, comprenant une pluralité de couches de panneaux cellulaires (20) ayant des cellules en boucle fermée interconnectées (22, 22') définissant un réseau à cellules ouvertes, lesdites cellules étant orientées sensiblement horizontalement quand l'absorbeur d'énergie est monté sur le véhicule, ledit réseau à cellules ouvertes comprenant des cellules d'au moins deux tailles différentes (22, 22') positionnées dans au moins deux sections différentes de l'absorbeur d'énergie pour absorber plus d'énergie dans une section que dans l'autre, dans lequel ledit réseau à cellules ouvertes est formé par extrusion et dans lequel chacun desdits panneaux cellulaires extrudés (20) possède lesdites au moins deux sections, de sorte qu'une première desdites deux sections a des cellules (22) d'une première taille prédéterminée et d'une première épaisseur de paroi prédéterminée, et qu'une seconde desdites deux sections a des cellules (22') d'une seconde taille prédéterminée et d'une seconde épaisseur de paroi prédéterminée, inférieure à ladite première taille prédéterminée et ladite première épaisseur de paroi prédéterminée, et dans lequel le réseau à cellules ouvertes peut varier entre les couches de panneaux cellulaires de l'absorbeur d'énergie.

2. Absorbeur d'énergie pour traverse de pare-chocs selon la revendication 1, dans lequel le positionnement desdites sections desdites couches desdits panneaux cellulaires (20) coopère pour absorber l'énergie.

3. Absorbeur d'énergie pour traverse de pare-chocs selon la revendication 2, dans lequel un matériau de renforcement en feuille (24) est interposé entre lesdites couches de panneaux cellulaires (20).

4. Absorbeur d'énergie pour traverse de pare-chocs selon la revendication 2, dans lequel lesdites couches de panneaux cellulaires (20) sont enfermées avec un matériau de renforcement en feuille (24).

5. Système de pare-chocs de véhicule, comprenant
une traverse d'impact (12) configurée pour être attachée à un châssis de véhicule,
un carénage (16) positionné pour dissimuler ladite traverse d'impact, et
un absorbeur d'énergie (14) selon l'une quelconque des revendications 1 à 4, pris en sandwich entre ladite traverse d'impact (12) et ledit carénage (16).

6. Système de pare-chocs de véhicule selon la revendication 5, dans lequel ledit absorbeur d'énergie (14) est contouré pour se nicher dans et pour supporter ledit carénage (16).

7. Système de pare-chocs de véhicule selon la revendication 6, dans lequel une couche extérieure des panneaux cellulaires (20) est configurée pour s'effondrer plus aisément qu'une couche intérieure de panneaux cellulaires (20).

8. Système de pare-chocs de véhicule selon la revendication 7, dans lequel ladite couche extérieure est adjacente audit carénage (16).

9. Procédé de fabrication d'un système de pare-chocs de véhicule selon l'une quelconque des revendications 5 à 8, ledit procédé comprenant les étapes consistant à :
extruder un matériau en feuille pour donner un panneau cellulaire (20) ayant un réseau à cellules ouvertes comprenant des cellules d'au moins deux tailles différentes (22, 22') positionnées dans au moins deux sections pour absorber plus d'énergie dans une section que dans une autre;
combiner au moins deux panneaux cellulaires (20) pour former un absorbeur d'énergie (14), dans lequel les cellules (22, 22') dans les panneaux cellulaires (20) sont orientées sensiblement horizontalement ;
conformer une face extérieure dudit absorbeur d'énergie (14) pour s'ajuster de façon complémentaire à l'intérieur d'une face intérieure d'un carénage (16) ;
combiner ledit absorbeur d'énergie entre ledit carénage et une traverse d'impact.
